# EUROPEAN PATENT APPLICATION

(11) **EP 2 933 761 A1**
(43) Date of publication of application: **21.10.2015**
(21) Application number: 14305551.5
(22) Date of filing: 15.04.2014
(51) Int. Cl.: G06Q 10/02

(54) **Method, system and computer program product of handling electronic miscellaneous documents for in-voluntary passenger modifications of ancillary services**

(71) Applicant: Amadeus S.A.S., 06410 Biot (FR)
(72) Inventor: Laffitte, Anatole, 06370 Mouans Sartoux (FR); Alberola, Bertrand, 06580 Pegomas (FR); Argano, Manuela, 06600 Antibes (FR); Pellegrin, Caroline, 06370 Mouans Sartoux (FR); Ngando, Garnier, 06300 Nice (FR)
(74) Representative: Lopez, Frédérique

(57) **Abstract**

The present invention relates to a computer-implemented method, a system and a computer program for handling Electronic Miscellaneous Documents (EMD) in case of involuntary passenger modifications of ancillary services. The invention allows processing the EMD exchanges by collecting data from a variety of sources, adapting and aggregating the data into a single record to automatically process in a single query one or more changes of EMDs for several passengers at the same time.

## Description

### Technical Field

The present invention is in the field of airline ticketing, and relates more particularly to a method, system and computer program product of handling Electronic Miscellaneous Documents exchange for involuntary modifications of ancillary services.

### Background of the Invention

Electronic Miscellaneous Documents (EMDs) are being more and more used by airlines. Electronic Miscellaneous Documents enable agents to issue documents for travel related services, including unbundled airline services. As the industry continues the evolution to a paperless environment, the International Air Transport Association (IATA) and the Airlines Reporting Corporation (ARC), the two organizations that handle travel transactions among suppliers, consumers and agencies, have set the target of a full global implementation of the new technology of EMDs by the end of 2013.

EMDs allow issuing all travel related services, through mainly two types of documents:
- The 'standalone EMD' (EMD-S) which can be used independently from a standard flight ticket, and which can be issued for services such as car rental or lounge access; and
- The 'associated EMD' (EMD-A) which is issued for services directly linked to a flight coupon, such as for example, excess baggage or seat reservation.

It may come that a provider cannot deliver one or more of the ancillary services initially planned or that a ticket to which one or more EMDs are associated is disrupted. Such changes - namely involuntary changes which are not requested by the end-users - involve a modification of the original EMDs issued for the customers. The agencies in charge of the EMDs issuance have to ensure that the customers will not be impacted by those changes, and the agents have to provide all the customers with a new document allowing each benefiting the new service(s) or similar service(s) on a different flight, without paying any additional fee.

Updating an EMD is a critical process which nowadays is manually performed through a series of long and complex operations. A new record has to be created containing both the reference of the original document and the information about the new service(s), indicating that the customer has already paid and that no additional amount is due, and so... This is a time consuming process.

Moreover, such modifications are generally performed in a tense context (disruption, customers unsatisfied due to unexpected changes...) and potentially on a high number of documents, which is thus error prone.

There are solutions for allowing the automatic updating of electronic tickets. For example, U.S. Patent No. 7,809,593 from the Assignee discloses a method for automatically keeping travel data consistent between passenger reservation records and corresponding electronic tickets whenever a travel segment is updated.

However, the re-pricing of an EMD is a far more complex operation than the re-pricing of a ticket or an e-ticket, one of the reasons being that the price of a new EMD depends among other parameters on the price of the related (e-)ticket. And this situation is to become critical as the number of services included in the reservation files are expected to be growing, which will make the number of EMDs and the number of EMD exchange requests drastically increase.

There is no solution today for handling the involuntary modifications of ancillary services and for automatically updating Electronic Miscellaneous Documents.

Thus there is a need for an efficient and reliable solution for the automatic handling of EMDs exchanges for involuntary modifications of ancillary services. The present invention offers such solution.

### Summary of the invention

An object of the present invention is to offer a system and method to automatically handle EMDs updating for involuntary changes of ancillary services.

Advantageously, the present invention allows performing complex transactions by collecting data from a variety of sources, adapting and aggregating the data into a single record to process in a single query one or more changes of EMDs for several passengers at the same time.

Another object of the present invention is to provide a flexible layout within a user graphical user interface allowing to clearly identify both all the services impacted by the changes and the related documents to be exchanged.

Advantageously, the present invention allows handling multiple changes scenario by triggering different processes adapted to each specific scenario. The system allows identifying and handling disruption use cases which may lead to an EMD reassociation process instead of an EMD exchange one.

According to a first aspect of the present invention, there is provided a method as further described in the appended independent claim 1.

In particular, one aspect of the invention is directed to a computer-implemented method of handling an Electronic Miscellaneous Document (EMD). The method comprises receiving a request for an involuntary change in a passenger airline reservation, the involuntary change request comprising at least Passenger Name Record (PNR) data, retrieving from airline database EMD data linked to the PNR data, determining if an EMD exchange can be performed by checking exchange eligibility rules from the PNR data and the EMD data, and in case of a valid determination step automatically processing the EMD exchange.

Further embodiments are described in the appended dependent claims.

According to a second aspect of the present invention, there is provided an apparatus comprising means adapted for carrying out each step of the method according to the first aspect of the invention.

According to a third aspect of the present invention, there is provided a computer readable medium having encoded thereon a computer program comprising instructions for carrying out the steps of the method when the computer program is executed on a computer.

Further advantages of the present invention will become clear to the skilled person upon examination of the drawings and detailed description. It is intended that any additional advantages be incorporated therein.

### Brief description of the drawings

Embodiments of the present invention will now be described by way of example with reference to the accompanying drawings in which like references denote similar elements, and in which:
Figure 1 is a diagrammatic view of an exemplary operating environment including a plurality of computer systems;
Figure 2 is a diagrammatic view of an exemplary computer system of Figure 1;
Figure 3 is a block diagram of an exemplary service changer system of the present invention;
Figures 4a and 4b are flow chart of the steps performed at the input analyzer component of the present invention;
Figure 5 is a flow chart of the steps performed at the involuntary case management component of the present invention;
Figure 6 is a sequence diagram in accordance with an embodiment of the method of the present invention;
Figure 7 illustrates the data provided by the different components and database for the creation of a new pricing record;
Figure 8 illustrates an exemplary PNR before and after an involuntary change rebooking;
Figures 9a and 9b illustrate an exemplary EMD before and after an involuntary change rebooking associated to the PNR of figure 8;

### Detailed description of the invention

Embodiments of the invention are generally directed to systems, methods, and computer program products to automatically handle the updating of electronic miscellaneous document in response to involuntary changes to ancillary services and/or an involuntary change to a flight ticket to which an ancillary service is associated. The service changer system may perform complex transactions by collecting data from a variety of sources, adapting and aggregating the data into a single record to simultaneously process in a single query one or more changes of electronic miscellaneous documents for several passengers. The service changer system provides a flexible layout within a user graphical user interface that permits the services impacted by the changes to be identified and the related documents to be exchanged. In response to different scenarios characterized by multiple changes to one or more electronic miscellaneous documents, the service changer system can trigger different processes adapted to each specific scenario. The service changer system may identify and handle use cases prompted by flight disruptions that may lead to a re-association process to handle the electronic miscellaneous document instead of an exchange process.

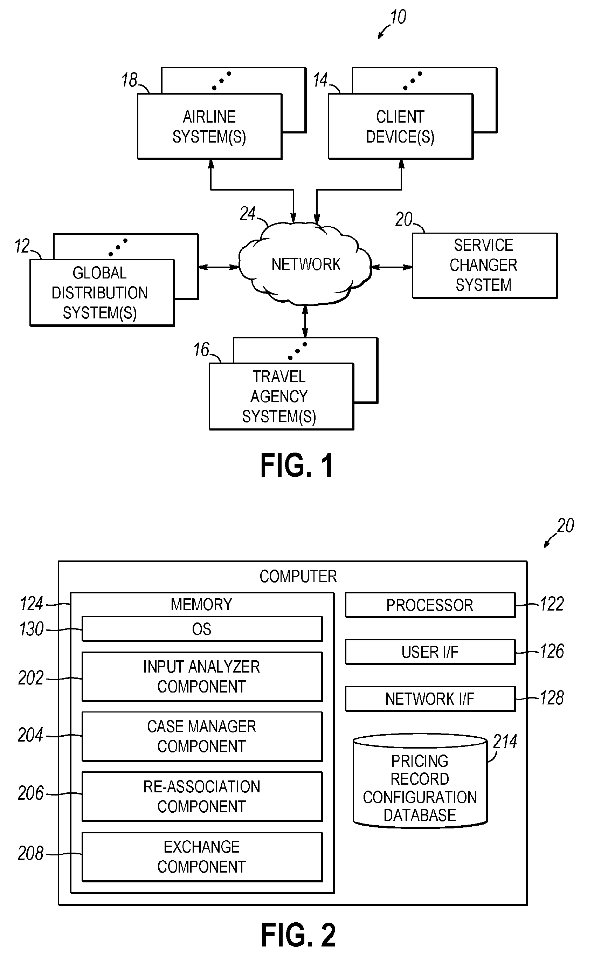

With reference to FIG. 1, an operating environment 10 may include one or more global distribution systems (GDS) 12, one or more client devices 14, one or more travel agency systems 16 constituting indirect seller systems, one or more airline systems 18 constituting carrier systems, and a service changer system 20. The GDSs 12, client devices 14, travel agency systems 16, airline systems 18, and service changer system 20 may be coupled to a network 24. The network 24 may include one or more private and/or public networks (e.g., the Internet) that enable the exchange of data.

Each GDS 12 may be configured to facilitate communication between the travel agency systems 16 and the airline systems 18 by enabling travel agents, validating carriers, or other indirect sellers to search for available travel products and book reservations on one or more of the airline systems 18 via the GDS 12. To this end, each GDS 12 may maintain a communication link to each airline systems 18 via the communication network 24. These communication links may allow the GDS 12 to obtain scheduling and availability data for travel products from the airline systems 18. Each travel agency system 16 may thereby book flights, as well as trains, hotels, rental cars, or other services, from multiple service providers via a single connection to the GDS 12.

In response to a travel product being booked, the GDS 12 may receive and store information about the travel product in a passenger name record (PNR). The PNR may be generated, at least in part, by the airline systems 18, and may comprise one or more reservation records comprised of segments and traveler data associated with one or more booked reservations. PNR segments may be identified, for example, as active (e.g., for a service yet to be provided by the corresponding service provider), passive (e.g., for a service reserved in another system or provided by a third party), past date, flown, information, open (e.g., for a purchased service having an open date), or canceled. The PNR may be stored in a database accessible to GDSs 12, airline systems 18, travel agency systems 16, and service changer system 20. The PNR may be identified by a record locator unique to each PNR, and may include segments defining an itinerary for a particular trip, service, passenger, or group of passengers. The itinerary may include services from multiple carriers (e.g., flights, bus, and or rail segments), hotel reservations, rental car reservations, or any other travel-related services.

Each airline system 18 may include a computer reservation system (CRS) and/or billing system for the respective service provider. The CRS may enable each GDS 12 and/or each travel agency system 16 to reserve ticketed services, such as flights, rail services, hotel rooms, or rental cars, as well as ancillary services associated with the ticketed services. Each airline may own and operate airport ticket offices (ATO) and city ticket offices (CTO) to sell tickets for themselves and/or other airlines. The airline systems 18 may each include a reservation system that enables airline ticketing offices, the GDSs 12, and/or the travel agency systems 16 to find, book, and pay for airline tickets.

Each travel agency system 16 may include a server application, such as a web server, that provides a publicly accessible website. This website may be configured to provide access to travel planning features, such as the ability to search for travel products matching a travel request. To this end, each travel agency system 16 may be configured to provide the traveler with access to data from one or more databases hosted by the GDS 12, travel agency systems 16, and/or airline systems 18.

Each client device 14 may be any suitable computing system configured to communicate over the network 24. Each client device 14 may comprise a desktop, laptop, or tablet computer, a smart phone, a personal digital assistant, or any other mobile or fixed computing device that enables the traveler to search for and book travel services over the network 24. For example, each client device 14 may include a client application, such as a web-browser, that communicates with a server application hosted by one of the travel agency systems 16, such as a web-server. The server application may, in turn, communicate with the GDS 12, travel agency systems 16, and/or airline systems 18 to obtain data relating to available travel services so that a traveler may book travel services and be issued electronic documents.

The GDS 12 may access one or more document databases to store and retrieve data relating to electronic tickets or other electronic documents associated with a purchased service. The service changer system 20, which may be hosted by, e.g., a GDS 12 or an airline system 18, may be configured to handle the exchange of electronic miscellaneous documents (EMDs) in response to voluntary passenger modifications to a reservation. The service changer system 20 may be provided by an airline IT solution provider that also provides a network infrastructure for the operating environment 10, and that may offer, among others, hardware and software components for online transactions involving sales tickets and ancillary services. All or a portion of the service changer system 20 may be integrated into one or more of the other systems, such as one of the GDSs 12.

Each EMD may comprise one or more electronic coupons stored in a document database accessible to at least the service changer system 20, with each coupon corresponding to a service provided by the EMD. In response to one or more of the electronic coupons being used, exchanged, or refunded, the document database may be updated to reflect a change in status of the electronic document.

Figure 2 provides a block diagram that illustrates the components of the one or more servers of a computer system that may comprise the service changer system 20 in accordance with an embodiment of the invention. The service changer system 20 may receive and process a request for an involuntary change to an EMD that is generated and triggered by an airline in response to the occurrence of an unexpected external factor and without consultation with the traveler.

The service changer system 20 includes at least one processor 122 including at least one hardware-based microprocessor and a memory 124 coupled to the at least one processor 122. The memory 124 may represent the random access memory (RAM) comprising the main storage of the service changer system 20, as well as any supplemental levels of memory, e.g., cache memories, non-volatile or backup memories (e.g., programmable or flash memories), read-only memories, etc. In addition, memory 124 may be considered to include memory storage physically located elsewhere in the service changer system 20, e.g., any cache memory in a microprocessor, as well as any storage capacity used as a virtual memory, e.g., as stored on a mass storage device or on another computer coupled to the service changer system 20.

For interface with a user or operator, the service changer system 20 may include a user interface 126 incorporating one or more user input/output devices, e.g., a keyboard, a pointing device, a display, a printer, etc. Otherwise, data may be communicated to and from another computer or terminal (e.g., GDSs 12, client devices 14, travel agency systems 16, and airline systems 18) over a network interface 128 coupled to the communication network 24. The service changer system 20 also may be in communication with one or more mass storage devices, which may be, for example, internal hard disk storage devices, external hard disk storage devices, external databases, storage area network devices, etc.

The service changer system 20 typically operates under the control of an operating system 130 and executes or otherwise relies upon various computer software applications, components, programs, objects, modules, engines, data structures, etc. In particular, the components may include an input analyzer component 202, a case manager component 204, an EMD re-association component 206, an EMD exchange component 208, and a pricing engine 216, and may comprise instructions that may be resident and/or stored in the memory 124.

The service changer system 20 may include one or more databases including, for example, a pricing record configuration database 214. The database 214 may comprise data and supporting data structures that store and organize the data. In particular, the database 214 may be arranged with any database organization and/or structure including, but not limited to, a relational database, a hierarchical database, a network database, and/or combinations thereof. A database management system in the form of a computer software application executing as instructions on the processing unit of the service changer system 20 may be used to access the information or data stored in records of the database 214 in response to a database query.

Moreover, various applications, components, programs, objects, modules, engines etc. may also execute on one or more processors in another computer coupled to the service changer system 20 via the communication network 24, e.g., in a distributed or client-server computing environment, whereby the processing required to implement the functions of a computer program may be allocated to multiple computers over a network. For example, some of the functionality described herein as being incorporated into the service changer system 20 and/or components of the service changer system 20 may be implemented in one or more servers. Consistent with embodiments of the invention, the modules, applications, components and/or engines may be executing on one or more servers of the service changer system 20, and may cause the processor 122 of the service changer system 20 to perform operations consistent with embodiments of the invention.

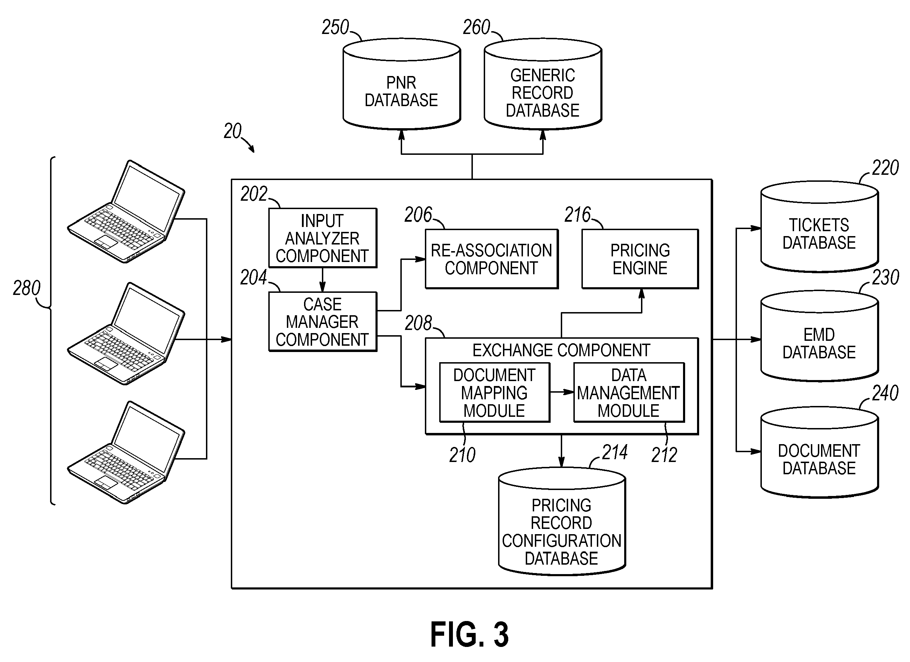

Figure 3 depicts a block diagram of an airline service changer (ASC) system 20 of the present invention in a preferred embodiment. The ASC 20 performs all the operations of handling an involuntary service change in accordance with the method of the present invention as further described. The involuntary service changes cover the cases where a traveler has no choice over the change(s). It may be generated after the occurrence of an unexpected external factor that forces the airline to change the EMDs. Involuntary changes are for example the result of a flight cancellation or of a schedule changes. An involuntary change request may be triggered either by a direct or an indirect channel, i.e. airline websites, cryptic terminals, GUI terminals, GDS or travel agent, or by another system capable of automatically handling disruption cases, all shown as Client Terminal 280.

The ASC 20 is coupled to various components including a variety of databases to store documents involved in the process, such as electronic tickets (ticket database 220), EMDs (Electronic Miscellaneous Document database 230), or other generic documents (Document database 240), as well as information on reservation, in the form of a PNR (Passenger Name Record database 250) or other type of record (Generic Record database 260). The databases 220, 230, 240, 250, 260 may be similar in organization and structure to the pricing record configuration database 214. The databases 220, 230, 240, 250, 260 may be hosted at one or more of the GDSs 12 and/or airline systems 18.

Each EMD stored in the EMD database 230 is an electronic document that may be issued in response to a traveler purchasing an ancillary service. The EMD can be consulted to determine whether the traveler is entitled to receive the ancillary service. Exemplary services for which EMDs may be issued include allowances to carry additional luggage, entitlements to enter special zones (e.g., a business lounge), receive a meal or a beverage during a travel segment (e.g., a flight), choose a specific seat (e.g., a window seat, an aisle seat, a seat with extra leg room, etc.), receive transportation services between an airport and a hotel, or receive premium in-flight services.

Each PNR stored in the PNR database 250 may include traveler data that provides details of a traveler's reservation, other data related to the traveler's trip, and data that assists airline personnel with passenger handling. Specific data typically found in the PNR may include the name of the traveler, a passenger type code, data identifying one or more reserved travel segments, contact information for the traveler, when and where tickets are to be issued, and the ticketing office or agent that made or updated the reservation. When an EMD is issued for an ancillary service, the PNR may be updated with data that associates the PNR with the EMD. The travel service provider may thereby associate the segments in the PNR with the EMD for the corresponding ancillary service purchased by the traveler.

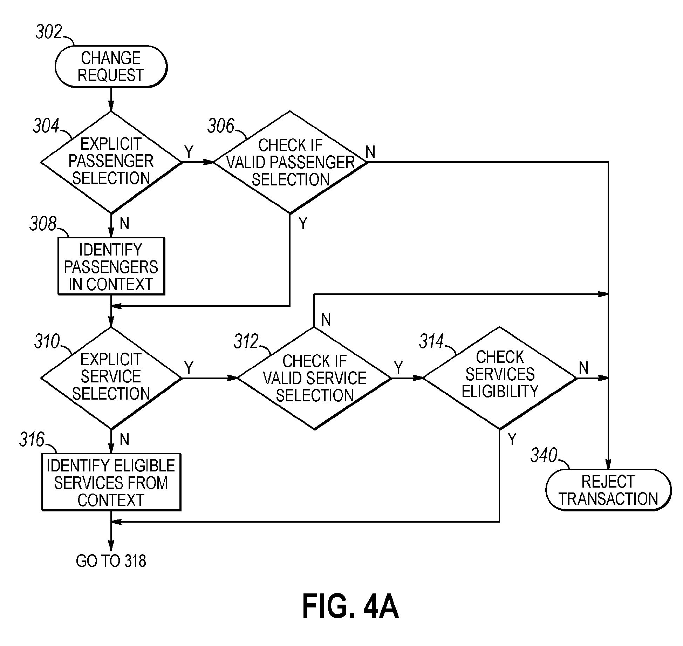

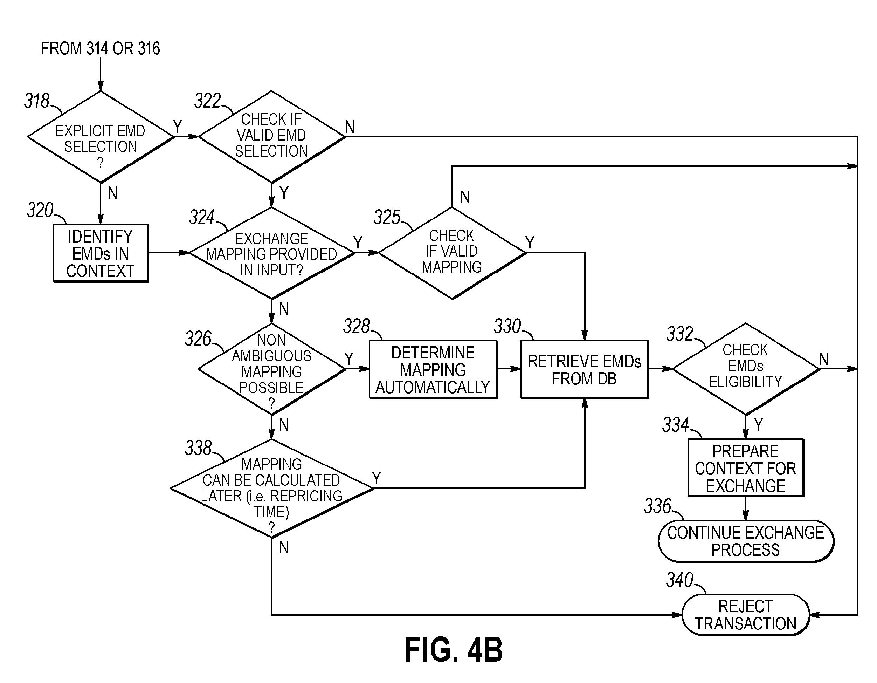

The content and operating mode of the ASC 20 is further discussed in conjunction with Figures 4-6.

The ASC 20 includes an Input Analyzer component 202 for verifying the validity of an involuntary change request. The request to be processed may require performing one or several exchanges, each of them from one or more EMDs to one or more services for a given passenger. The information on the services to be included in the exchange can be either explicitly selected by the agent or it can be automatically identified from the context of the request.

After a validity checking process detailed below with description of figures 4a and 4b, the involuntary change request is further processed by an Involuntary Case Manager component 204.

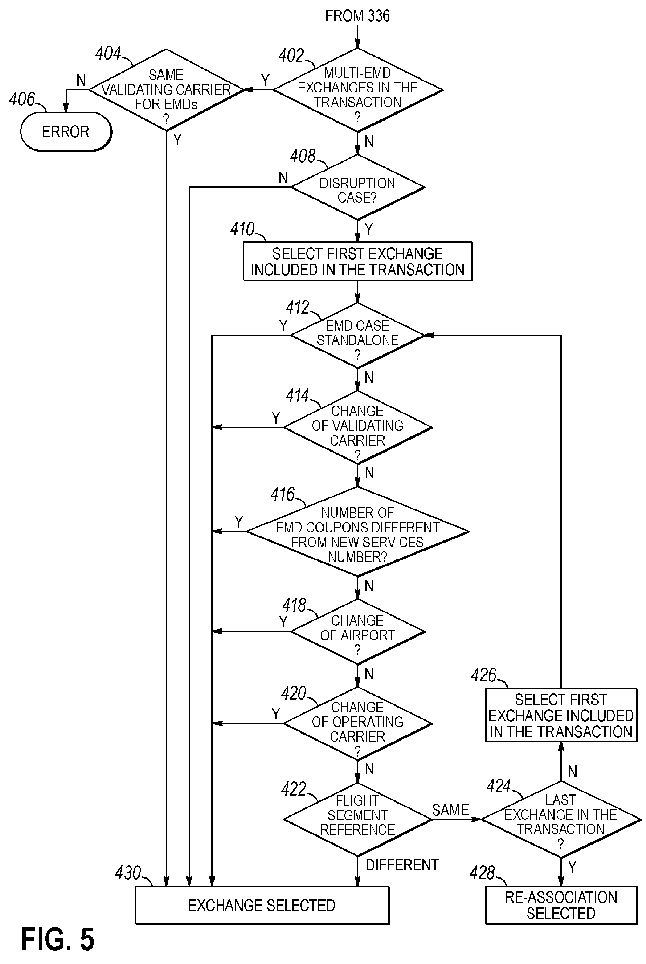

The Involuntary Case Manager 204 is in charge of verifying a set of requirements in order to identify the outcome of the transaction and determine whether the EMD is to be exchanged with a new one or if the existing EMD is to be updated. The determination process is further discussed below with reference to Figure 5. The Involuntary Case Manager output is then input to either an EMD Re-association component 206 or to an EMD Exchange component 208.

The EMD Re-association component 206 handles the operations of associating an existing EMD subject to the involuntary service change to a new element generated by the involuntary service change. The EMD Re-association component 206 allows preparing the PNR for the current re-association of the EMD for instance by creating links between the new rebooked service elements and the fare elements in the PNR representing the EMD to exchange.

The EMD Exchange component 208 handles the operations of generating a new EMD combining data from the original EMD and data associated to the new rebooked services. The EMD Exchange component includes a Mapping Document module 210 for selecting the data from the original EMD that must be kept in the new record, and a Data Management module 212 for aggregating the selected data with all information specific to the new service(s), such as data extracted from the PNR and pricing information.

The EMD Exchange component 208 is further coupled to pricing modules (214, 216). A Pricing Record Configuration database 214 storing pricing records configurations allows that the creation of a pricing record is done in conformity with defined airline rules as all or part of the data for the new EMD may depend on specific airline rules. An Involuntary Pricing Engine 216 provides all specific fare data to allow the passenger is not charged for the new services.

The EMD output from the ASC 20 is further stored in the EMD database 230.

Figures 4a and 43b show the steps performed at the Input Analyzer component 202. The process 300 begins when an involuntary change request is received on step 302. At this step, all data required for the exchange process must be gathered, including information on passengers and services impacted by the involuntary change. As previously explained, the Input Analyzer is in charge of verifying the validity of the requested exchange. One advantage of the process is to automatically retrieve the missing information (done through steps 308, 316, 320, 328) if the change request does not define all the elements involved for the exchange.

After the receipt of the involuntary change request, the process allows on step 304 to determine if all the passengers for which the exchange has to be performed are identified in the request by appropriate passenger selections from the agent. If the passenger selections are clearly mentioned (branch Yes) the next step 306 is to check the validity of the passengers' selections. For example, if the passenger exists in the context and if the request is coherent in general with this context (e.g. in the request it is mentioned "pax infant 1" and if "pax 1" exists but for an adult, then the check fails. If the passenger selections are not valid, the process ends 340, otherwise the process goes to step 310.

Going back to step 304, if the passenger selections are not mentioned in the request (branch No) the process allows to automatically retrieve all the passengers involved in the current context of the change on step 308.

After the passengers identification steps (304, 306, 308) the process allows checking the validity of the change request at services level by controlling several eligibility criteria.

On step 310, the process checks if the new services are mentioned in the request. If yes, the process checks on next step 312 the validity of the services selections in the request, i.e. if the service exists in the context or if it is associated to the selected passenger. If the services selections are not valid, the process ends 340, otherwise the process goes to step 314.

On step 314, the process allows checking the eligibility of the selected services to involuntary changes. If the services are not valid, the process ends 340, otherwise the process goes to step 318. The eligibility is defined through several rules determining which services can be targeted by an exchange and which cannot. For instance, all the services that cannot be priced could be excluded from exchange. Another eligibility rule can be based on the date of the service, where for example past dated services are excluded from the exchange.

Going back to step 310, if the services are not explicitly selected by the agent in the request, the process allows on step 316 to use the predefined eligibility criteria to filter services in the PNR, in order to discard the non eligible services from exchange process. And the process continues on step 318 as illustrated on figure 4b.
On step 318, the process checks if the EMD(s) is/are explicitly defined in the request. If yes, the process checks on next step 322 the validity of the EMD selections in the request. For example, it is checked if the selection is done by a reference in the PNR, if it exists and corresponds to an EMD, or if it is an EMD number, the process checks the existence in the EMD DB. If the EMD selections are not valid, the process ends 340, otherwise the process goes to step 324. On step 324, a test is performed to check if a mapping between documents and services is provided in the request. For example, if the request contains two separate lists, one with the EMDS and one the services, or either a list of associations between EMD and services like "EMD1-SRV1-2, EMD2-SRV3-4".

Going back to step 318, if the EMD selections are not explicitly mentioned in the request (branch No), the process allows on step 320 to automatically identify and retrieve all the EMDs involved in the current context of the change, and the process continues on step 324.

On step 324, if no mapping document is found in the request (branch No), the process goes to step 326, otherwise the process continues to step 325. On step 325, a test is performed to check if the mapping is valid or not. If not, the process ends on step 340. For example, several services can be requested to be included in the same exchange but if they don't have the same RFIC code, they cannot be in the same pricing record, and the mapping is considered not valid. If the mapping document is valid, the process goes to step 330.

Going back to step 326, meaning that no mapping document is provided in the input request, the process allows determining its own mapping between EMDs and services mainly on the basis of passenger association. A test is performed to determine if a single mapping document can be selected for the current change context. If no single mapping document can be selected (branch No), the process goes to step 338 to determine if the mapping operation can be determine at later stage of the exchange process. This could be the case for example if it is not possible to infer all exchanges from the PNR and have pricing engines to provide a feature to calculate the mapping based on amount balances. If the mapping cannot be postponed (branch No) the process ends on step 340, otherwise the process goes to step 330.

If test 326 provides one single mapping document result, the process continues on step 328 to determine automatically the mapping document to be applied to the exchange request. And the process goes to step 330.

On step 330, the process allows automatically retrieving the EMDs to be selected for the involuntary change request from the EMDs database 230.

On next step 332, a test is performed to check the eligibility of each EMD retrieved on previous step based on predefined eligibility rules. For example, an EMD that has a coupon already on exchanged or reissued status is not eligible to current request of involuntary exchange. For EMD not eligible, the process ends 340, otherwise for eligible EMDs, the process goes to step 334.

On step 334, the process allows updating the PNR for each passenger. For instance, if previous pricing records are present in the existing PNR for the rebooked services, they are deleted.

After step 334, the process continues the exchange process on step 336.

Going to figure 5, a flow chart 400 of the steps performed at the Involuntary Case Manager component 204 is now described. The Involuntary Case Manager 204 allows determining if the existing EMD is to be exchanged with a new one or is to be updated by a re-association operation. A set of various requirements are checked in the process 400 as follow.

The process begins when an involuntary request is issued by the Input Analyzer 202. A first check 402 allows determining if there are multiple EMD exchanges in the transaction. If yes, the process goes to step 404 to determine if for each EMD exchange, all EMDs involved in the exchange are handled by the same validating carrier. If the answer is No, the process ends 406, otherwise the process goes to step 430 to select an exchange operation to be handled by the EMD Exchange component 208.

If there are not multiple EMD exchanges involved in the transaction, the process goes to step 408 to check if it is a disruption context. In case of a disruption, the process continues on step 410, otherwise the process goes to step 430 to select an exchange operation.

On step 410, the process allows selecting the first EMD of the request and goes to step 412 to check if the type of the EMD, is a standalone EMD-S. If yes, the process goes to step 430 to validate an exchange operation, otherwise, the process goes to step 414 to check if there is a change in the validating carrier. If the answer is No the process goes to step 416, otherwise the process goes to step 430 to select an exchange operation.

On step 416, the process allows checking if the number of EMD coupons is different from the number of new services in the request. If the answer is No the process goes to step 418, otherwise the process goes to step 430 to select an exchange operation.

On step 418, the process allows checking if there is a change in the airport. If the answer is No the process goes to step 420, otherwise the process goes to step 430 to select an exchange operation.

On step 420, the process allows checking if there is a change in the operating carrier. If the answer is No the process goes to step 422, otherwise the process goes to step 430 to select an exchange operation.

On step 422, the process allows comparing the reference of the flight segments. If the flight segment reference is the same, the process goes to step 424, otherwise if the reference is not the same, the process goes to step 430 to select an exchange operation.

On step 424, the process allows checking if the last EMD exchange is processed. If the answer is No, the process allows selecting the next EMD in the request on step 426 and go back to step 412.

If the last EMD exchange has been processed, the process goes to step 428 to select a re-association operation to be handled by the re-association module 206.

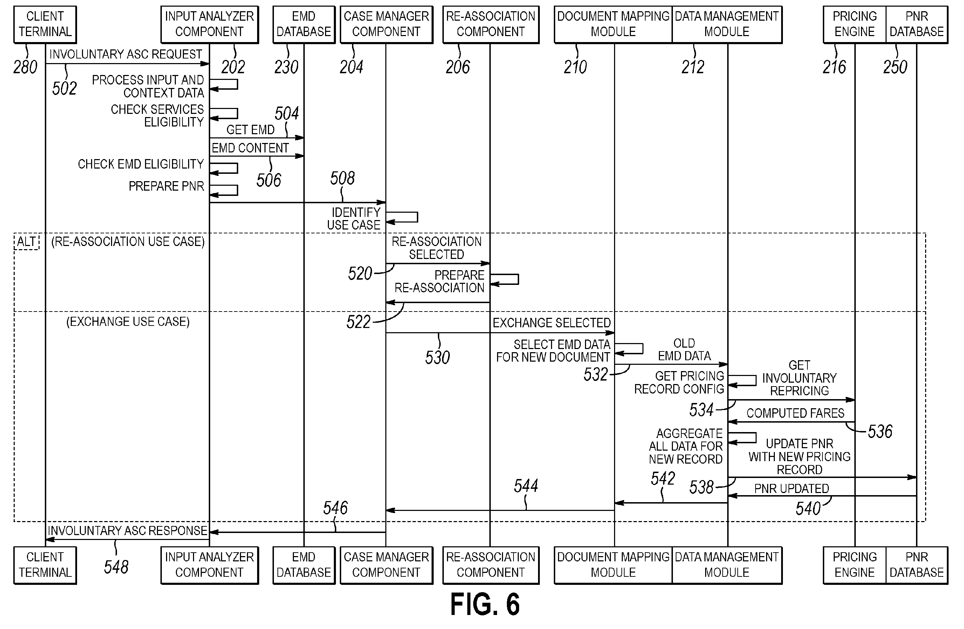

Figure 6 is a sequence diagram illustrating the data flow between the components of the present invention in accordance with an embodiment. References to the components of figure 3 are the same. The first data flow 502 consists in receiving at the Input Analyzer, a request for involuntary services changes. The content of the request is analyzed and eligibility of the new services requested is checked as detailed with reference to figure 4a.

The next data flow 504 consists for the Input Analyzer to query the EMD database 230 to retrieve the EMD corresponding to the request and to send it back on next data flow 506. At reception of the EMD, the Input Analyzer 202 finalizes the overall request checking process as described in figure 4b and prepares the PNR for pursuing the process.

Next data flow 508 consists in providing the data to the Involuntary Case Manager 204 which is in charge of determining which sub-process applies to the current case, an EMD re-association or an EMD exchange as detailed with reference to figure 5.

Data flow for an EMD re-association consists in querying 520 the Re-association module 206 to prepare the PNR data and the various links for the re-association and to send back 522 to the Involuntary Case Manager 204 acknowledgement when done.

Data flow for an EMD exchange consists in querying 530 the Document Mapping module 210 to select those data from the current EMD to be imported in the new EMD. Once done, the next data flow 532 consists in providing the old data selected to the Data Management module 212 which is in charge of aggregating all data, old and new, data from the current PNR context, data for the specific configuration, data from the Involuntary Pricing Engine 216. To get all the data, the Data Management module queries 534 the Involuntary Pricing Engine 216 to compute the fares and send back 536 the fares values computed. Due to the involuntary character of the transaction, the total fare of the new record is set to zero, since the customer is not to pay any additional collection for rebooked services. All price data that will be part of the new record and that depend on that are peculiar to involuntary exchange transaction are computed at this step.

The Data Management module 212 after receiving the fare computation contains all data to fill a new pricing record 500.

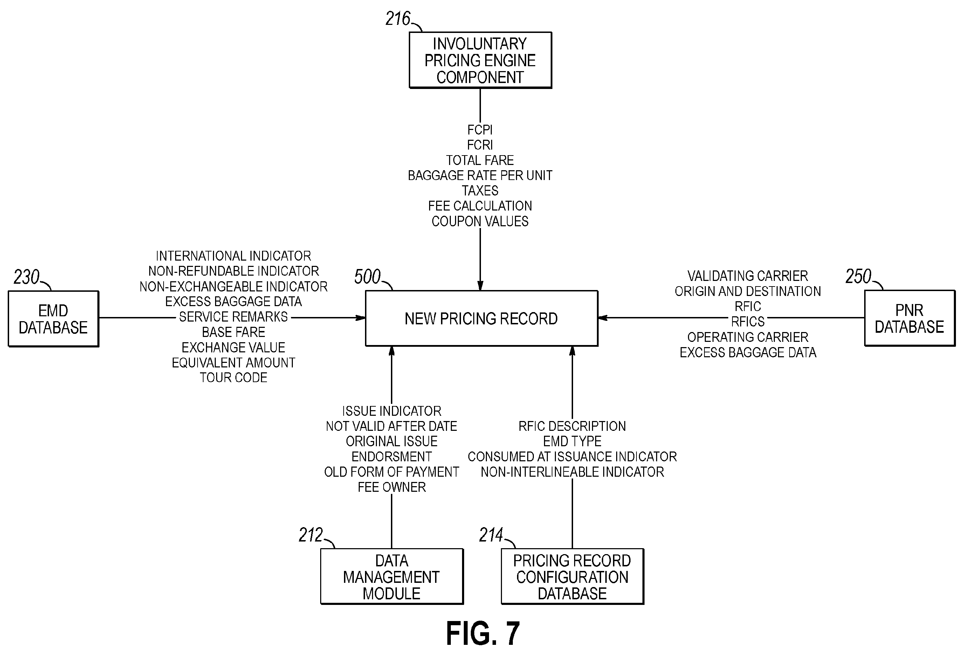

Next data flow 538 consists in updating the PNR database 250 with the new pricing record and to receive 540 the updated PNR. Figure 7 illustrates the data provided by the different components and databases for the creation of the new pricing record 500.

Next data flow 542 of the exchange process consists in providing the updated PNR to the Document Mapping module 210 and to send back 544 the whole data to the Involuntary Case Manager 204.

The involuntary change process is ended by sending 546 to the Input Analyzer the data either from the re-association process or from the exchange process. Last data flow 548 consists in sending to the Client terminal the result of the involuntary change process to the initial request.

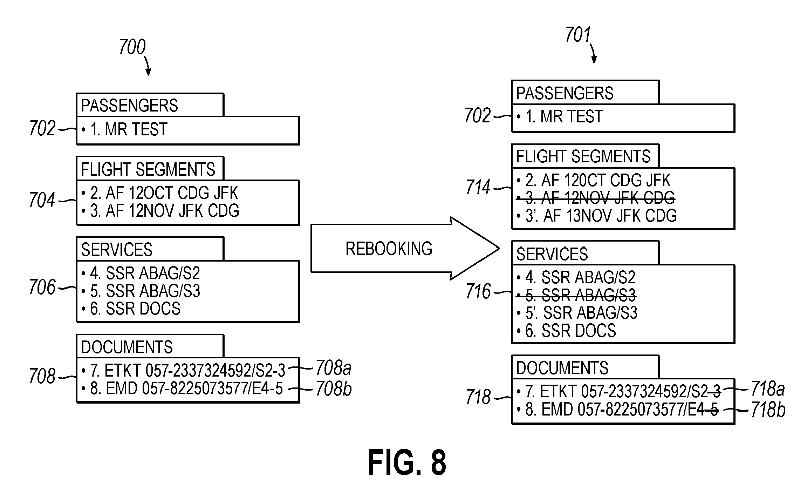

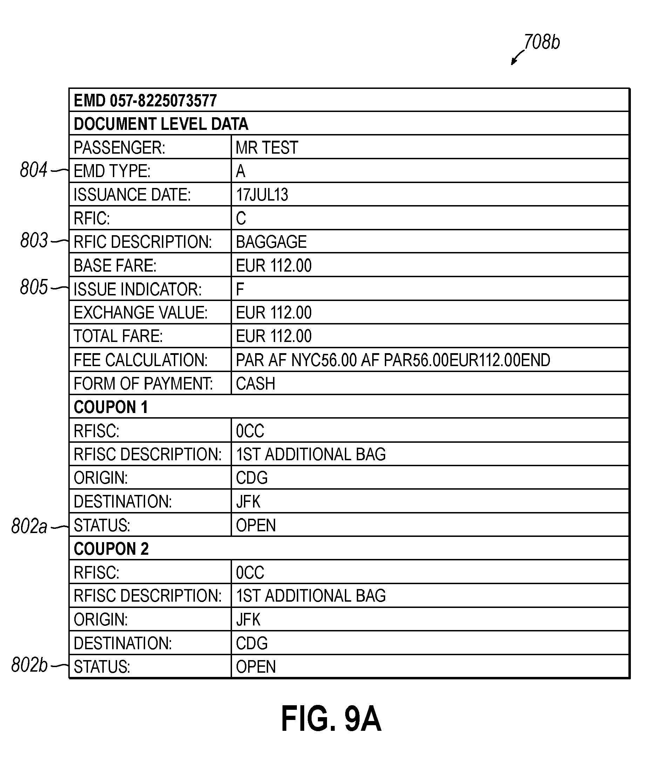

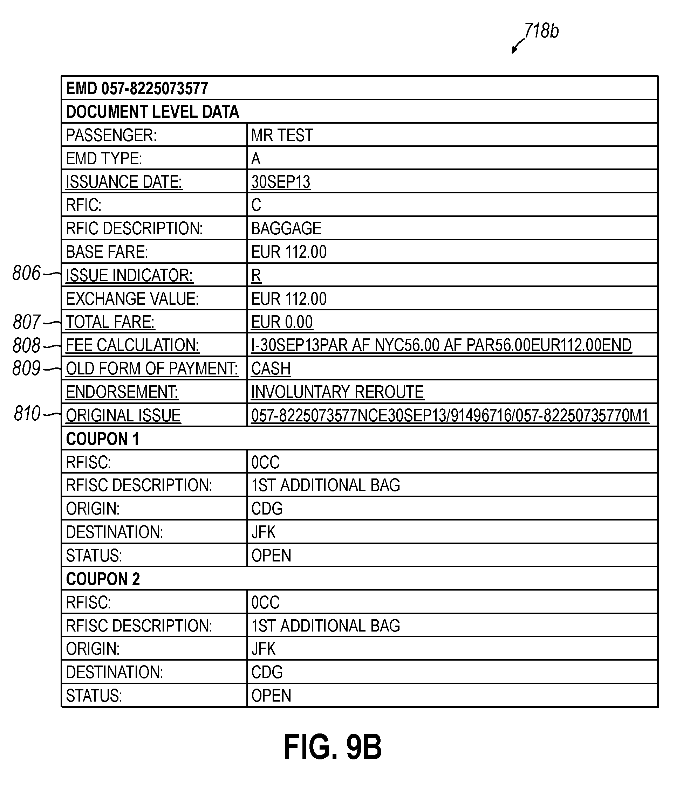

Reference is now made to figure 8 which illustrates an exemplary PNR before and after an involuntary change rebooking and to figures 9a and 9b which illustrate an exemplary EMD 708b before an involuntary change rebooking associated to the PNR of figure 8 and an exemplary EMD 718b after an involuntary change rebooking associated to the PNR of figure 8. The following description is made in the context as shown on the left of figure 8 of a passenger (1.Mr. TEST 702) who is reserved (Flight Segments 704) on a flight from Paris to New York on the 12^{th} of October (2.AF 120CT CDG JFK), with a return on the 12^{th} of November (3.AF 12NOV JFK CDG). Ancillary services 706 are requested for an additional baggage for the whole itinerary (4.SSR ABAG/S2 and 5.SSR ABAG/S3). The documents 708 generated for Mr TEST booking are an e-ticket 708a (7.ETKT 057-2337324592/S2-3) for the flight and an EMD 708b (EMD 057-822073577/E4-5) for the services.

In the exemplary scenario, the airline decides for commercial reasons to cancel the New York/ Paris flight of November, 12th that Mr. TEST purchased. As a consequence, an airline agent needs to rebook a different flight for the customer, for instance the day after. The old flight and the service associated to initial flight are deleted from Mr. TEST's reservation and they are replaced by a new flight 714 (3'.AF 13NOV JFK CDG) with a different date and a new additional service 716 (5'.SSR ABAG/S3) for the baggage associated to this flight. Other documents are still valid but they only apply to the portion of the itinerary that has not been rebooked. The agent has to exchange the old documents with the new reservation. Since the e-ticket exchange does not fall in the scope of the present invention, it is not further detailed herein, and only the EMD exchange is now detailed.

The agent from his or her client terminal 280 (e.g. a cryptic terminal) displays the PNR of the customer as rebooked with the new itinerary. He sends an EMD exchange request preferably using a cryptic command 'FXI/EMD' with no parameters explicitly selected. The current PNR context is taken into account in the request. As already detailed, the Input Analyzer module 202 processes the context identifying the following elements for the exchange:
- Passenger: (1.Mr TEST) is the only passenger in the PNR.
- SSRs: (4.SSR ABAG/S2) (5'.SSR ABAG/S3). While there is a third service in the PNR (6.SSR DOCS) this service is set as non priceable and is considered non eligible to the exchange.
- EMD: (EMD 057-8225073577): only one EMD referenced in the PNR for passenger 1.

As already described on data flow 504, it is necessary to verify the data contained in the EMD, and the EMD database is queried to retrieve the entire EMD document for analyzing its content to determine the conditions for its eligibility. The coupon status is verified. In the example, as shown on figure 9a, the EMD has two coupons (802-a, 802-b) in status "open" meaning the EMD document is eligible to an exchange.

The next steps of Mr TEST's EMD exchange, is to verify the constraints for a re-association as previously illustrated with reference to figure 4. The condition 402 that a re-association does not apply to multi EMD exchanges is verified since the considered example is for the exchange of a single document. The second condition 408 is to check if the case is for a disruption. As the agent has not mentioned in the request a disruption because the rebooking is a commercial choice of the airline, this condition is not satisfied and the exchange is proposed.

To obtain the complete record that will become the reissue EMD document, all data have to be gathered or computed. The Mapping Document module 210 is in charge of retrieving all the information related to the old EMD. For the considered example, the information provided is:
- International indicator: I;
- Base fare: 112.00 EUR;
- Exchange value: 112.00 EUR.

The rest of the old EMD data is provided as input to the Data Management module 212 for additional computations (as shown by data flow 532).

As already described, the Data Management module retrieves the configuration data for the considered service, i.e. the additional baggage ABAG. For the considered example, the configuration data will include:
- RFIC description (803): BAGGAGE;
- EMD type (804): A (flight associated);
- Consumed at issuance flag (805): FALSE;
- Non interlineable indicator : FALSE.

The EMD data previously retrieved are forwarded to the Involuntary Pricing Engine 216 for the calculations specific to involuntary change process. For the current scenario, the following pricing data are computed:
- FCPI and FCRI flags: both set to '1' to indicate that this calculation is considered manual (not performed by a standard pricing engine).
- Total fare: set to '0.00 EUR', since in involuntary exchange no additional collection is due, expressed in reissue currency.
- Fee calculation updated adding at the beginning 'I' to specify the involuntary character of the exchange and the date of exchange.

Last remaining data to fill the new pricing record are computed by the Data Management module. For the current scenario, the following data are computed:
- Issue indicator, R for reissue;
- NVA date, Not Valid After date, in this case 17JUL14;
- Original issue: contains the reference to exchanged EMD and coupons, as well as the exchange date, and IATA number of the office;
- Endorsement, INVOL REROUTE to specify that exchange is involuntary;
- Old form of payment, CASH since it was the form of payment of exchanged EMD;
- Fee owner AF, calculated from the old EMD document.

The exchange is finalized by updating the context with all the information processed (data flow 538). Most of these data will be part of the new pricing record that will be used to generate the new EMD at issuance time. Some of them can be stored in different elements of the PNR but still with links to the main pricing record, such as the original issue, the endorsement or the old form of payment. All these elements are created for the updated PNR and they will be available at issuance for the new document preparation.

A response is returned to the agent to communicate the successful transaction. Then, the agent is able to check the output of the transaction and request the issuance of the new EMD without performing any other manual operation. Figure 9b shows the new EMD issued for the described example with all modifications and repricing information updated. The repricing information is the Base Fare 806, Exchange Value 807, Total Fare 808, Fee Calculation 809. The new EMD further includes a link with the original issue 810.

To recall the benefits of the present invention is to offer an integrated solution, including all necessary checks of amounts and data, to allow that a transaction context is properly updated in order to provide agents and customers with clear visibility on the services being exchanged, so that reissuance can take place in one step. Results are returned in a couple of seconds.

Thus, methods, systems, and computer program products for handling electronic miscellaneous documents in response to involuntary modifications of services have been described. A request, which includes first data for a passenger name record, is received for a change to an airline reservation. Second data for an electronic miscellaneous document that is linked to the first data for the passenger name record is also received. A determination is made as to whether the electronic miscellaneous document can be exchanged by applying at least one exchange eligibility rule to the first data for the passenger name record and the second data for the electronic miscellaneous document. If the electronic miscellaneous document can be exchanged, an exchange of the electronic miscellaneous document is automatically processed.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications/modules described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

While all of the present invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described.

## Claims

1. A computer-implemented method of handling an Electronic Miscellaneous Document (EMD) in case of involuntary passenger change in a passenger airline reservation, the method comprising the steps of:
- receiving a request for an involuntary change in a passenger airline reservation, the involuntary change request comprising at least Passenger Name Record (PNR) data;
- retrieving from airline database EMD data linked to the PNR data;
- determining if an EMD exchange can be performed by checking exchange eligibility rules for the PNR data and the EMD data; and
- in case of a valid determination step automatically processing the EMD exchange.

2. The computer-implemented method of claim 1 wherein the checking step include one or more of: checking the validity of services selections in the request, checking the eligibility of the selected services to involuntary changes, checking mapping documents, determining services to be targeted by said exchange, excluding the services which cannot be priced from exchange, excluding past dated services, discarding the non eligible services from the exchange.

3. The computer-implemented method of any preceding claim wherein the checking step further includes one or more of: checking for a change in the validating carrier, checking the number of an EMD coupon, checking for a change in the airport, comparing the reference of the flight segments, checking the last EMD exchange.

4. The computer-implemented method of any preceding claim further comprising the step of issuing a rejection message if one or more of the exchange eligibility rules checkings fail.

5. The computer-implemented method of any preceding claim wherein the step of processing the EMD exchange consists in updating the passenger name record linked to the new EMD data, with no pricing record computation.

6. The computer implemented method of claim 3 further comprising the step of processing an EMD reassociation process in case the last EMD exchange is included in the involuntary change request.

7. The computer implemented method of any preceding claim wherein the involuntary change request is triggered by an airline website, or by a cryptic terminal or by a GDS or by a travel agent.

8. The computer implemented method of any preceding claim wherein the involuntary change request comprises one or more services impacted by the changes and references of the related documents to be exchanged.

9. The computer-implemented method of any preceding claim wherein the one or more services included in the involuntary change request are explicitly selected by a user or automatically identified from the context of the request.

10. The computer-implemented method of any preceding claim wherein the involuntary change request is associated to a flight cancellation or a schedule change.

11. The computer-implemented method of any preceding claim wherein the processing step further comprising collecting data from a variety of sources, adapting and aggregating the data into a single record to process in a single query at the same time one or more changes in several EMDs for several passengers.

12. The computer-implemented method of any preceding claim further comprising the step of including the new EMD data in the updated passenger name record at time of issuance of the passenger name record.

13. A computer readable medium having encoded thereon a computer program comprising instructions for carrying out the steps of the method according to any one of claims 1 to 12 when said computer program is executed on a computer.

14. A system for handling an Electronic Miscellaneous Document (EMD) in case of involuntary passenger change in a passenger airline reservation, the system comprising:
- means for receiving a request for an involuntary change in a passenger airline reservation, the involuntary change request comprising at least Passenger Name Record (PNR) data;
- means for retrieving from airline database EMD data linked to the PNR data;
- means for determining if an EMD exchange can be performed by checking exchange eligibility rules for the PNR data and the EMD data; and
- means for automatically processing the EMD exchange.

15. The system of claim 14 further comprising means adapted for carrying out each step of the method according to any one of the claims 1 to 12.
